# EUROPEAN PATENT APPLICATION

(11) **EP 2 890 170 A1**
(43) Date of publication of application: **01.07.2015**
(21) Application number: 14170605.1
(22) Date of filing: 30.05.2014
(51) Int. Cl.: H04W 12/06, H04L 29/06, H04W 4/12

(54) **Method and system for barcode and link initiated hotspot auto-login in WLANs**

(30) Priority: 17.12.2013 EP 13197658
(71) Applicant: Deutsche Telekom AG, 53113 Bonn (DE)
(72) Inventor: Roos, Andreas, 64354 Reinheim (DE); Amirsalari, Mohammad Hadi, 61169 Friedberg (DE)
(74) Representative: Vossius & Partner Patentanwälte Rechtsanwälte mbB

(57) **Abstract**

Method and system for automated hotspot login, wherein login credentials are transmitted automatically from the user's device (61) to the hotspot without the user (6) being required to enter said login credentials.

## Description

### Background

IP traffic in mobile networks has increased in the past years and will still increase in the upcoming years [1]. This behaviour is based on the fact that the market penetration of smart phones and tablet PCs has increased in the past and will increase as well [1]. The challenge of mobile network operators is to provide application service delivery to the user in satisfying quality, even if the network load increases. This means, even if the network load increases, the remaining network access resources / capabilities have to assure application service delivery which satisfies the quality of experience of the user. An ability to discharge mobile access networks is cellular traffic offloading by means of WLAN [2]. Facets of WLAN are public WLAN based hotspots which enable broadband Internet connectivity. Several network operators, e.g. Kabel Deutschland [3] and Deutsche Telekom [4] have deployed a lot of WLAN based hotspots. Even large city centre areas have been covered by hotspots, e.g. Telekom Hotspot-Zone in Hamburg [5], Google WiFi for Mountain View [6] to provide broadband Internet access. Such WLAN covered areas can be of interest to offload mobile access networks as well.

Basically, hotspots are able to offload mobile access networks. However, before this really becomes reality, hotspots have to overcome some drawbacks. One drawback is often the high hotspot fee which demotivates users to use hotspots. Another drawback is often the usability concerning the way of payment and the usability of getting logged-in to the hotspot. EAP-SIM [7] is an approach which enables automated login to hotspots. However, it will take time to equip all existing hotspots with this mechanism. Today's user who has a hotspot flat-rate accounts can use so called Wireless Internet Service Provider roaming (WISPr) clients/methods [8] which enables auto-login to the hotspot without the need of the user to interact with the hotspot login page. However, this approach requires at least a WISPr application/app on the user device, which should not be a problem in today's 'app-world'. The much more difficult issue is that the user has to have a flat-rate account in order to get the user credentials, such as user name and password. This means, the user has to have a contract with the Internet service provider. As a result, the WISPr approach is not utilizable for the users without an existing contract with the Internet service provider, even if they would like to use the hotspots.

Accordingly, there is a need to overcome the above mentioned drawbacks of the art. In particular, it is an objective of this invention to provide a new method and system which provides a hotspot auto-login approach for the user even in the case that the user has no existing hotspot login credentials. There is no need for the user to enter the username and password on the hotspot login page.

### Summary of the Invention

The objects of the invention are achieved by the features of the independent claims. The dependent claims refer to further preferred embodiments of the invention. In particular, according to the present invention a new method and system provides a hotspot auto-login approach for the user even in the case that the user has no hotspot login credentials prior to the point in time of requesting a hotspot login. The presented method and system requires neither new hardware nor software within the user terminal which is needed to perform the login process. Moreover, the user does not have to enter his/her user name and password on the hotspot login page. The proposed mechanism can basically be deployed for all kinds of web-based login mechanisms in IP-based networks, e.g. in WLAN-based access networks, such as hotspots. Moreover, the method and system integrates the ability to pay for the hotspot use.

The following aspects refer to the preferred methods and systems according to present invention:
1. Method to provide automated hotspot login without the need of the user to enter user name and password into the hotspot login page.
2. Method of aspect 1 whereby the user has not to have hotspot login credentials prior to the time of requesting a hotspot login.
   a. a new hotspot architecture entity (voucher server) is introduced that is responsible for the creation of a user hotspot account.
   b. a new hotspot architecture entity (information exchange server) is introduced that is responsible for the requesting and deriving the hotspot login user credentials.
3. Method of aspect 1 whereby user gets the opportunity to automatically login by means of, e.g. a so called 'auto-login' button on the hotspot landing page, which initiates/triggers the auto-login process.
4. Method of aspect 1 whereby the user is identified by means of his/her mobile phone number.
5. Method of aspect 1 whereby the automatic and user related barcode created and presented on the hotspot landing page comprises information, such as user-identifier, device-identifier, network-identifier and voucher server identifier, e.g. phone number.
6. Method of aspect 1 whereby the automatic and user related SMS link created and presented on the hotspot landing page comprises information, such as user-identifier, device-identifier, network-identifier and voucher server identifier, e.g. phone number.
7. Method of aspect 1 whereby two approaches for hotspot auto-login exist
   a. First approach envisages a single device (e.g. tablet PC) with a SIM-card inside.
      i. auto-login approach is initiated by clicking on a predefined link in the auto-login area.
      ii. link is used to trigger the opening of the SMS tool on the device.
      iii. needed information (e.g. user-identifier, device-identifier, network-identifier, mobile phone identifier and voucher server identifier) for SMS creation is comprised in the link.
      iv. information will be filled in the SMS tool of the device automatically after clicking the link
   b. Second approach envisages two devices, such as the hotspot connecting device (e.g. laptop or tablet PC) and a mobile phone with a SIM-card.)
      i. auto-login approach is initiated by scanning a barcode, e.g. a Quick Response (QR) code, in the auto-login area.
      ii. a state of the art barcode scanning tool is needed on the mobile phone.
      iii. barcode reading application is used to trigger the opening of the SMS tool on the mobile phone.
      iv. needed information (e.g. user-identifier, device-identifier, network-identifier, mobile phone identifier and voucher server identifier) for SMS creation is comprised in the barcode.
8. Method of aspect 1 whereby the voucher server is addressed by a phone number.
9. Method of aspect 1 whereby the user receives an SMS containing the hotspot login credentials (user name and password) which is created by the voucher server.
10. Method of any one of aspects 1 to 9, whereby no further functionalities must be implemented on the user device.
11. System configured to enable automated hotspot login without the need of the user to enter user name and password into the hotspot login page whereby
   a. a new hotspot architecture entity (voucher server) is introduced that is responsible for the creation of a user hotspot account.
   b. a new hotspot architecture entity (information exchange server) is introduced that is responsible for the requesting and deriving the hotspot login user credentials.
   c. identifier of the user is the mobile phone number.
   d. identifiers of the hotspot connecting device is, e.g. user-identifier, device-identifier, network-identifier, mobile phone identifier.
   e. identifier of the voucher server is a mobile phone number.
   f. database that contains parameters, such as user-identifier, device-identifier, network-identifier, mobile phone identifier, hashed MAC address, user name and password
   g. databases that contains accounting data

By means of this method the user gets logged-in to the hotspot automatically without entering of user name and password on the hotspot login page. In addition to the automated hotspot login process the user receives the user name and password sent via SMS in order to be able to enter the user credentials on the login page if the user wants to do this later in time. Preferably, no extensions of the software or hardware are required on the end user device side. The identification of user and its devices is done by applying double standards. The user with her/his mobile phone is identified by the mobile phone number, while the hotspot connecting device, e.g. laptop and / or tablet PC is identified by means of an identifier (ID), e.g. the media access control (MAC) address of the WLAN interface and / or IP address of the WLAN interface.

In order to access the Internet via the offered hotspot service the user is connected with her/his device (e.g. laptop and / or tablet PC) to an access point of the hotspot architecture. The landing page of the hotspot is presented to the user after the user starts the web browser and requests a URL by means of the browser. In most of today's landing pages the user gets offered a login area. In this login area the user is able to enter the user credentials, such as the user name and password. After entering the user credentials the authentication and authorisation process is started by pressing the button 'login'. As described, in this method the user needs to be aware of the user name and password beforehand. Moreover, the login procedure has to be performed manually. There is no mechanism to request the user credentials and to provide an auto-login to the hotspot.

The present invention exploits the behaviour to preferably implement a hotspot architecture extension which triggers the user credential generation, user device verification and an automated hotspot login for the user without the need to enter the user credential on the hotspot login page. Moreover, the user receives the credentials sent via SMS to the user's mobile phone.

Before the user is able to use the hotspot auto-login solution, he/she has to connect to the WLAN of the hotspot. Moreover, the user has to start the web browser and needs to request a URL. Due to the redirect mechanism of the hotspot solution the web browser gets redirected to the landing page of the hotspot, which provides the possibility for the user to login to the hotspot by means of entering the user credentials, such as user name and password. This hotspot login behaviour is as usual. By means of this invention the user gets presented, in addition to the traditional login area, a so called 'auto-login' area on the landing page.

The auto-login area offers two approaches to the user in order to initiate the auto-login process for getting access to the hotspot. The first approach envisages a single device (e.g. tablet PC) with a SIM-card inside. The second approach envisages two devices, such as the hotspot connecting device (e.g. laptop or tablet PC) without a SIM-card and a mobile phone with a SIM-card.

The first auto-login approach is initiated by clicking on a predefined link in the auto-login area. This link is used to trigger the opening of the SMS tool on the device. All the needed information for SMS creation is comprised in the link. This information will be filled in the SMS tool of the device automatically after clicking the link. The information in the link is e.g. user-identifier, device-identifier, network-identifier, mobile phone identifier and voucher server identifier.

The second auto-login approach is initiated by scanning a barcode, e.g. a Quick Response (QR) code, in the auto-login area. For this auto-login approach a state of the art barcode scanning tool (e.g. i-nigma [10]) is needed on the mobile phone. The barcode reading application is used to trigger the opening of the SMS tool on the mobile phone. All the needed information for SMS creation is comprised in the barcode. The information in the barcode is e.g. user-identifier, device-identifier, network-identifier, mobile phone identifier and voucher server identifier.

In both auto-login approaches the created SMS is used to trigger the user account creation in the hotspot backbone architecture. The SMS is received by the so called 'voucher server'. The voucher server is addressed by a phone number specified in the link and / or barcode. Based on the received SMS, the voucher server creates a new user account in the hotspot user database. The user account is described by means of several identifiers, such as user-identifier, device-identifier, network-identifier and mobile phone identifier. The user name for logging into the hotspot is set to the mobile phone identifier, such as the mobile phone number of the SMS sending device of the user. The password is set to a randomly created value.

After the user account creation, the voucher server sends the user name and password back to the user's SMS sending device. As a result, now the user knows his/her hotspot login credentials. The user is now able to enter the hotspot login credentials manually in the state of the art hotspot login area. Furthermore, by means of this invention the user is able to click on the auto-login button in the auto-login area which will login the connected device automatically to the WLAN hotspot. As a result, the user and the device respectively get logged into the hotspot without the need to enter the user credentials on the hotspot login page.

Further features of the invention, its nature and various advantages, will be more apparent from the accompanying drawings and the following detailed description of the drawings and the preferred embodiments.

### Brief description of the drawing

- Figure 1: illustrates a hotspot architecture which enables an automated login functionality to login the user device to the hotspot without the need of the user to enter the user name and password on the hotspot landing page;
- Figure 2: illustrates an exemplary implementation; and
- Figure 3: illustrates an exemplary implementation.

### Detailed description of the drawing

The following technical solution describes the "hotspot auto-login" approach, according to the present invention. This solution is a concrete realisation of a hotspot auto-login mechanism which provides hotspot login without the need of the user to enter the user name and password on the hotspot landing page.

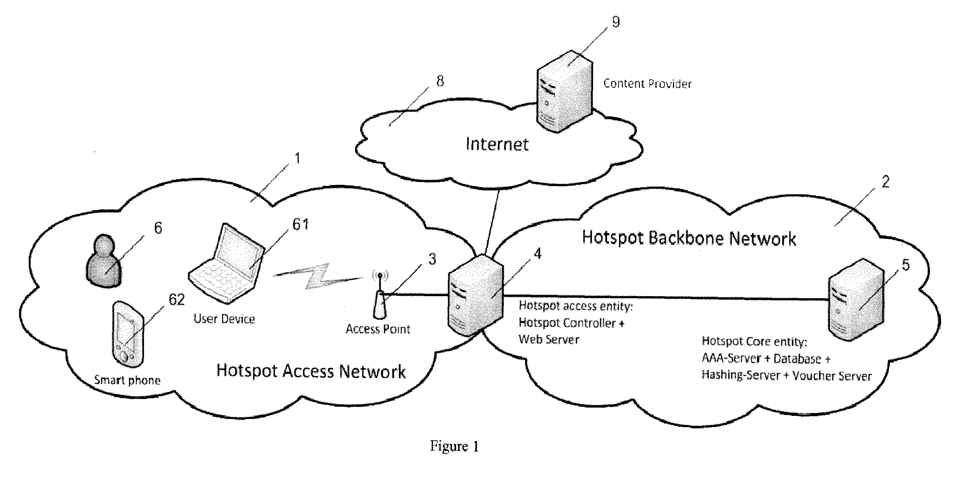

Figure 1 illustrates a hotspot architecture which enables an automated login functionality to login the user device to the hotspot without the need of the user to enter the user name and password on the hotspot landing page. The hotspot architecture consists of several network segments and entities. The network segments are the "hotspot access network" and the "hotspot backbone network". The hotspot entities are "WLAN-based access points", a "hotspot access entity" and a "hotspot core entity". The user device is connected to the hotspot via the WLAN-based access points. Moreover, the hotspot is connected to the Internet via the hotspot controller.

An illustrative embodiment according to the present invention is given in Figure 1, Figure 2 and Figure 3 which consists of several network segments and entities. The network segments are the "hotspot access network" 1 and the "hotspot backbone network" 2, as shown in Figure 1. The hotspot entities are "WLAN-based access points" 3, a "hotspot access entity" 4 and a "hotspot core entity" 5. The user 6 and her/his device 61 are connected to the hotspot via a WLAN-based access point 3. Moreover, the hotspot is connected to the Internet 8 via the hotspot controller 41. Finally, the user device communicates through the Internet with a content provider 9.

The hotspot access entity 4 consists of a "hotspot controller" 41 and a "web server" 42. The hotspot core entity 5 consists of an "authentication, authorisation and accounting (AAA) server" 51, database (DB) 52, "voucher server" 53 and "information exchange server" 54.

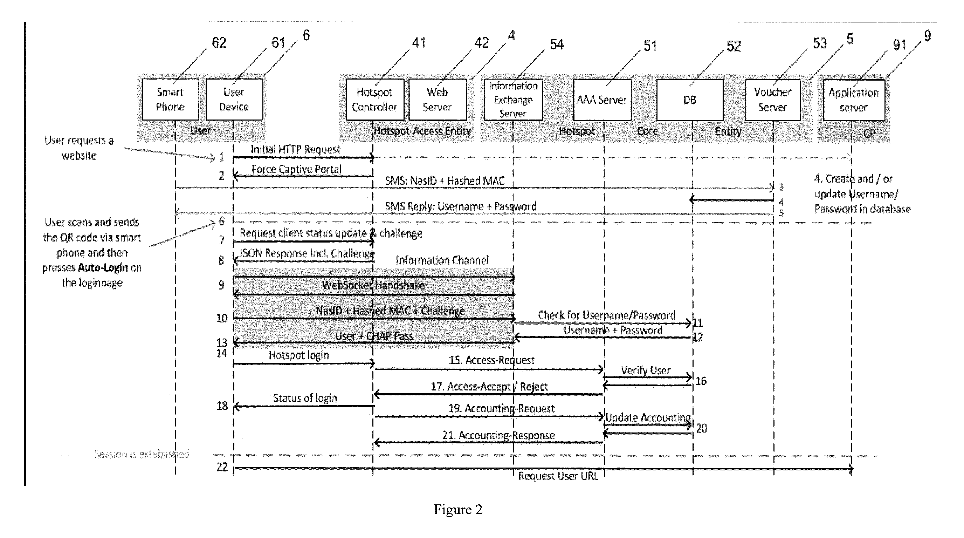

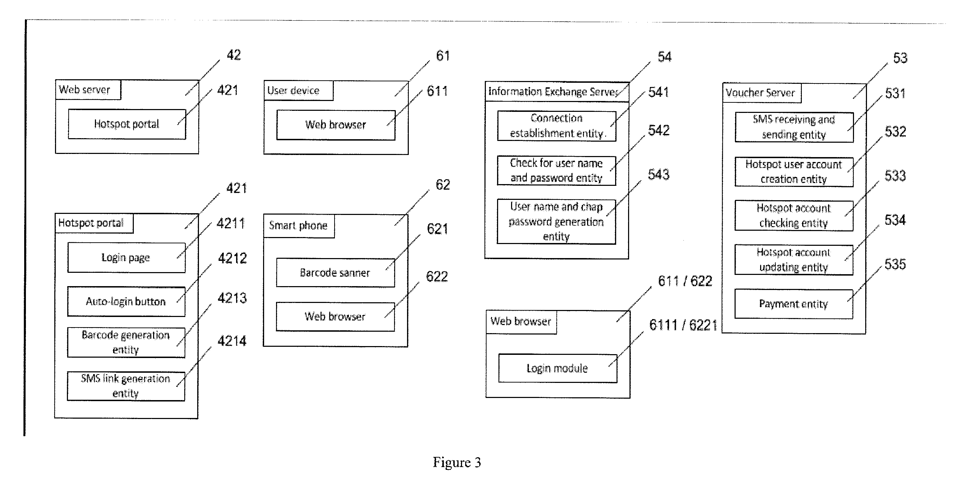

In the following, a technical solution based on an exemplary implementation presented in Figure 2 and Figure 3 is described. It is assumed that the user 6 is connected to the hotspot access network 1 using his user device 61 (e.g. a laptop or tablet PC) and intends to request content in the Internet 8.

In step 1 the user 6 is trying to request content, e.g. website, from an application server 91 offered by a content provider 9 in the Internet. The website is addressed by a specific URL. In order to request the content of the content provider 9, the user 6 enters the URL in the web browser 611 and presses enter on the user device 61 keyboard. Due to this the web browser on the user device 61 sends out an HTTP request on port 80 with the intention to reach the application server 91. However, the hotspot controller 41 intercepts the HTTP request using HTTP Hijacking technique and in step 2 the built in web server 42 replies with code "302 Moved Temporarily" which will be translated inside the web browser 611 in a redirection to a new URL, which is the hotspot portal (also called captive portal) 421 address. The web browser 611 automatically redirects to the login page (also called portal page) 4211. The new URL generated by the hotspot controller 41 contains information, such as uamip (the IP address of the hotspot controller 41), uamport (the port of the hotspot controller 41), challenge (a unique randomly generated 32 character HEX value, which is generated by the hotspot controller to be used in the hashing, for CHAP authentication technique), called (MAC address of called access point), MAC (MAC address of user device), IP (IP address of device, NASID (network identifier), sessionID (unique session identifier), userURL (originally entered URL of the user).

The login page presents the auto-login approach, in addition to the traditional login approach (entering of user name and password). The auto-login approach offers two ways of getting triggered. The first way is using an automatic generated SMS link which is presented on the login page and the second way is using an automatic generated barcode, e.g. a QR code which is also presented on the login page. Both ways, the link and QR code, are used to open a SMS tool on a smart phone 62 or user device 61. The second way requires a barcode / QR code reading application on the smart phone 62 which triggers the opening of the SMS tools after scanning the barcode. Each way, the link and QR code, addresses a specific use case. The use case utilizing the link, addresses the users who use a single device, e.g. a smart phone 61 which is used to consume services in the Internet. The annotation for this use case is that the user device contains a SIM-card which allows sending SMS. The use case utilizing the QR code, addresses the users who consume services in the Internet on e.g. user device 61 which contains no SIM-card and is thus not able to send SMS. For the purpose of sending SMS the user uses a smart phone 62 in addition to the user device 61. The link and the QR code are both generated automatically and exclusive for the current connected user device. The link and QR code comprise the following information, such as network identifier, hashed value of MAC address and additional verification parameters which allows identifying the device, e.g. smart phone 62 or user device 61. The network identifier is used to determine the hotspot location. The MD5 hashed MAC address of user device is used to verify a specific device in a network. Additional verification parameters can be used to add extra verification. The barcode is generated by the "barcode generation entity" 4213 inside the web browser 611. The link is generated by the "SMS link generation entity" 4214 inside the web browser 611.

The user is able to decide which way of triggering the hotspot auto-login method is used. In the case that the user aims to use a user device which comprises a SIM-card, the user will click on the automatic SMS link on the login page, which triggers the opening of the SMS tool on the smart phone operating system. In the case that the user aims to use a user device which comprises no SIM-card, the user will scan the QR code on the login page presented on the user device 61 by means of its smart phone 62. The barcode scanner 621 software is used to trigger the opening of the SMS tool on the smart phone operating system.

In step 3 the SMS is sent to the voucher server, 53. The voucher server is addressed by a phone number specified in the link and / or barcode (identifier of voucher server).. The SMS is received by the "SMS receiving and sending entity" 531.

In step 4 the hotspot user database 52 is checked by the "hotspot account checking entity" 533 to see whether the user identified by her/his mobile phone number does already exist. In the case that the user already exists in the database 52, the "hotspot account updating entity" 534 deactivates the previous user account and a new user account is created by the "hotspot user account creation entity" 532. A hotspot user account in database 52 is described by the parameters nasID (network identifier), HMAC (hashed user device MAC address), user name (the user's mobile phone number) and password (random generated value). The nasID and HMAC values are extracted from the received SMS.

The "hotspot payment entity" 535, is responsible for the billing issues and triggers the payment deduction process automatically after receiving the SMS from the user. Depending on whether the user has a prepaid or post-paid mobile account the fee is either deducted directly from his mobile credit balance or will be updated on his monthly account bill.

In step 5, the "SMS receiving and sending entity" 531, of the voucher server 53, will send the created user credentials back to the user via short message service. The SMS includes the user name and password which can be used to login to the hotspot in the traditional manner by entering of user name and password or alternatively, the user can use the auto-login approach in order to get logged in automatically, by a single click on the button "auto-login" 4212 on the hotspot login page 4211. The user name is equal to the user's mobile phone number.

In step 6, the user is able to press on the "auto-login" button 4212 on the login page 4211 in order to initiate the auto login process. During the auto login process the user credentials are retrieved from the "information exchange server" 54, through a so called information channel and the rest of logon process will happen automatically and the user can start surfing on Internet. Before retrieving the credentials, the nasID and HMAC are verified by the "information exchange server" 54, with the ones received via SMS and stored in the database 52, by the "hotspot user account creation entity" 532. This verification is done in order to verify the authenticity of the request and correlate the received SMS with the received web request for auto login.

In step 7, a client status update request is sent from the user's web browser 611 to the hotspot controller 41. This request verifies whether the user is already logged in or not. An additional important purpose of this step is to retrieve the latest challenge value from the hotspot controller 41. Without the current valid challenge the authentication is not possible. The challenge is a random 32 character HEX value which is provided from the hotspot controller 41, in order to proceed with the authentication technique, such as CHAP. This challenge value which changes for every logon attempt is used for hashing the user's password during the CHAP authentication.

In step 8, the hotspot controller 41 sends back a response to the user 61. The response includes the current client status and also the current challenge. The parameters challenge, client state, location name, original URL, log out URL, Client's IP Address and Client's MAC Address are sent back to the user device.

After retrieving the current "challenge" and "client state" in step 8, the web browser in user's device is ready to initiate the auto-login process by communicating with the "information exchange server" 54. The aim is that the browser sends the required verification information (nasID + HMAC + Challenge) and in return receives a user name and CHAP password for auto login, which only works for the current session and machine. For that purpose, in step 9 the "information channel" is established. A candidate for the realisation of this information channel is a WebSocket [11] connection. In this implementation, a WebSocket communication protocol is selected due to its simplicity, efficiency and minimal transport time of this protocol. The process is started by opening a WebSocket connection by sending out a WebSocket handshake request (as an HTTP upgrade request) to the "information exchange server" 54 (WebSocket server). The WebSocket server accepts the connection by replying to the WebSocket handshake request. The communication between the WebSocket server and the WebSocket client can be protected from interfering by using a secure WebSocket key which only allows the server and the specific client to talk to each other. After the WebSocket connection is established, the client and server can exchange text or binary messages at any time without needing an initial request. The communication has the minimal overhead.

After successful establishment of the information channel, the browser 611 sends the verification information nasID, HMAC and CHAP challenge as a text message via the WebSocket connection to the "information exchange server" 54, in step 10. Henceforth, the browser waits for the reply of step 13 which contains the user credentials.

The verification information (nasID, HMAC and challenge), received from the user's browser via the information channel in step 10, are extracted by the "information exchange server" 54 and used to prepare a verification process which checks the existence of a user account in the database 52. The parameters nasID and HMAC are used to query the database 52 in step 11, in order to retrieve the related user credentials.

In the case that the user account exists, the related user credentials, such as user name and password are retrieved from the database 52 and are sent to the "information exchange server" 54 in step 12.

Based on the parameters "challenge" and "password", received in step 10 and 12 respectivly, the "information exchange server" 54 generates a "Challenge Handshake Authentication Protocol" (CHAP) password utilizing the CHAP authentication technique [12].

In step 13, the "information exchange server" 54, sends the login credentials (user name and CHAP password) back to the user's web browser via the information channel. The utilized WebSocket message contains the user name (the user's cell phone number) and the CHAP Password (related to the received challenge in step 10) as well. In the case that the user does not have an account entry in the database, 52, yet, the user is informed about this circumstance and is requested to use the auto-login method again, after sending the SMS and receiving a reply.

After successful delivery of the WebSocket message to user's browser 611, a CHAP login attempt is triggered automatically by the "login module" 6111 / 6221 which is running in the user's browser. A candidate for the login module 6111 / 6221 is a JavaScript library. In step 14 the "login module" 6111 / 6221 initiates a CHAP login process by sending the user credentials (user name and CHAP password) to the hotspot controller 41.

The hotspot controller 41 receives the CHAP logon request from the "login module" 6111 / 6221 inside the user's web browser 611 / 622 and processes it automatically by submitting an access-request to the AAA server 51, as performed in step 15. A candidate logon method is the user name and CHAP password. A candidate protocol for the communication between the hotspot controller 41 and AAA server 51 is the RADIUS protocol, while a candidate for the AAA server is FreeRADIUS server. CoovaChilli is a candidate for the hotspot controller.

In order to perform the authentication and authorisation process, the AAA server 51, requests the password of the login requesting user from the database 52 in step 16. The user is identified by the username, which is the phone number of the user's smart phone 62 and / or user device 61 (depending on the selected auto-login approach).

The result of the authentication and authorisation process, which is performed by the AAA server 51, is sent from the AAA server to the hotspot controller 41 in step 17. A candidate protocol is the RADIUS protocol. A successful user authentication and authorisation is answered by an access-accept message, while a non-successful user authentication and authorisation is answered by means of a access-reject message. In the case of a successful user authentication and authorisation, the hotspot controller 41 grants the hotspot and Internet access for this specific user device.

In step 18 the user gets informed about the authentication and authorisation status. The result is presented in the web browser 611 on the user device 61 or in the web browser 622 on the smart phone 62, depending on the selected auto-login approach.

In the case of granting network access for the user, the hotspot controller 41 sends an accounting-request message to the AAA server 51 in step 19. The accounting-request contains information which can be used to determine how long (login time and logoff time) the hotspot access is used by a user, how much data the user has sent and how often the user has logged into the hotspot. A candidate protocol is RADIUS. In step 20, all required accounting information is stored in the database 51. The confirmation of the accounting-request is provided in step 21 by means of an accounting-response message. The message in step 21 indicates a successful update of the database 51 with the particular accounting information of the specific user.

In step 22 the user has Internet access and is able to request services in the Internet.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### References:

1 Cisco, "Cisco Visual Networking Index: Global Mobile Data Traffic Forecast Update, 2012-2017". [Online]. Available 2013-11-11: http://www.cisco.com/en/US/solutions/collateral/ns341/ns525/ns53 7/ns705/ns827/white _paper_c11-520862.pdf
2 S. Dimatto, P. Hui, B. Han and V. O.K. L., "Cellular Traffic Offloading through WiFi Networks". [Online]. Available 2013-11-11: http://www.deutsche-telekom-laboratories.de/~panhui/publications/ mass11offload.pdf
3 Kabel Deutschland, "Kabel Deutschland Hotspots". [Online]. Available 2013-11-11: https://www.hotspot.kabeldeutschland.de/.
4 Telekom, "Hotspot der Telekom". [Online]. Available 2013-11-11: http://www.t-mobile.de/hotspot.
5 Telekom, "Telekom macht Hamburg zum Surferparadies". [Online]. Available 2013-11-11: http://www.hotspot.de/content/news_tcity2.html.
6 Google WiFi. [Online]. Available 2013-11-11: http://wifi.google.com/.
7 EAP-SIM, "Hotspot der Telekom". [Online]. Available 2013-11-11: http://www.t-mobile. de/hotspot.
8 Wireless Broadband Alliance, "WISPr v2.0 Specification Download". [Online]. Available 2013-11-11: http://www.wballiance.com/resource-center/specifications/#10.
9 Telekom, "Hotspot der Telekom". [Online]. Available 2013-11-11: http://www.t-mobile.de/hotspot.
10 i-nigma. [Online]. Available 2013-11-11: http://www.i-nigma.com/hp.html.
11 WebSocket. [Online]. Available 2013-11-11: http://www.websocket.org/.
12 RFC 1994, "PPP Challenge Handshake Authentication Protocol". [Online]. Available 2013-11-11: http://tools.ietf.org/html/rfc1994.

## Claims

1. A method for automated hotspot login, wherein login credentials are transmitted automatically from the user's device (61) to the hotspot without the user (6) being required to enter said login credentials.

2. The method according to claim 1,
wherein the user credentials are created after the time of requesting, by the user (6), a hotspot login,
wherein the user credentials are created by a voucher server (53) being integrated into the hotspot architecture, and
wherein the requesting and deriving of the user credentials is handled by an information exchange server (54) being integrated into the hotspot architecture.

3. The method according to claim 1 or 2, wherein the method comprises the following steps:
(i) a web browser (611) on the user's device (61) sends an request to the hotspot in order to reach an application server (91) offered by a content provider (9) on the Internet;
(ii) the hotspot controller (41) intercepts said request, and the built-in web server (42) replies to the web browser (611) so that the web browser (611) redirects to the hotspot login page (4211), wherein the login page (4211) provides the user with at least one possibility of initiating an automated login process,
wherein preferably, besides the at least one possibility of initiating an automated login process, the hotspot login page provides the user with the possibility of entering her/his user credentials.

4. The method according to any one of claims 1 to 3,
wherein the user's device (61) is equipped with SIM card allowing for sending an SMS; wherein one possibility of initiating an automated login process is providing a link on the hotspot login page (4211); and
wherein said link is formed such that after operating said link, the following additional steps are performed:
(iii-a) automatically triggering the opening of an SMS tool provided on the user's device (61);
(iii-b) automatically creating and sending, via said SMS tool on the user's device (61), an SMS from the user's device (61) to the voucher server (53),
wherein the phone number of the voucher server (53) is taken from and the contents of the SMS is created based on the information provided in the link having been operated,
wherein said link is preferably created by an SMS link generation entity (4214) inside the web browser (611), and
wherein the user's device (61) may be a tablet PC and / or a smartphone.

5. The method of claim 4, wherein said link provided on the hotspot login page (4211) comprises at least one of user-identifier, device-identifier, network-identifier, and voucher server identifier, wherein the voucher server identifier is, for example, a phone number.

6. The method according to any one of claims 1 to 3,
wherein one possibility of initiating an automated login process is providing a bar code, for example a QR code, on the hotspot login page (4211);
wherein said bar code is readable by a bar code reading application provided on a smartphone (62) of the user (6); and
wherein said bar code is formed such that after scanning the bar code by said bar code reading application, the following additional steps are performed:
(iii'-a) automatically triggering the opening of an SMS tool provided on the user's smartphone (62);
(iii'-b) automatically creating and sending, via said SMS tool on the user's smartphone (62), an SMS from the user's smartphone (62) to the voucher server (53),
wherein the phone number of the voucher server (53) is taken from and the contents of the SMS is created based on the information provided in the bar code having been scanned, and
wherein said bar code is preferably created by a bar code generation entity (4213) inside the web browser (611).

7. The method of claims 6, wherein said bar code provided on the hotspot login page (4211) comprises at least one of user-identifier, device-identifier, network-identifier, and voucher server identifier, wherein the voucher server identifier is, for example, a phone number.

8. The method according to any one of claims 1 to 7, wherein the user (6) is identified by means of her/his phone number, preferably mobile phone number of her/his device (61) or smartphone (62).

9. The method according to claim 8, comprising the further step(s) of:
(iv-a) checking, by the hotspot, whether or not the user identified by her/his phone number does already exist in a hotspot user database (52); and
(iv-b) deactivating, in case the user identified by her/his phone number already exists in said database, the previous user account and creating a new user account,
wherein preferably a user account in the hotspot user database (52) is described by at least one of the parameters network identifier, hashed user device MAC address, user name, and password, wherein the network identifier and the hashed user device MAC address are extracted from the received SMS, wherein as user name can be taken, for example, to the user's phone number, and wherein the password can be set, for example, to a randomly generated value.

10. The method according to claim 9, comprising the further step of:
(iv-c) triggering, by a hotspot payment entity integrated in the hotspot, a payment deduction process automatically after receiving the SMS from the user.

11. The method according to claim 9 or 10, comprising the further step of:
(v) sending, by the SMS receiving and sending entity, the created user credentials back to the user via a second SMS, wherein the user credentials preferably comprise user name and password.

12. The method according to any one of claims 9 to 11, comprising the further steps of:
(vi) waiting for the user to initiate the further proceeding of the automated login process by operating a respective button (4212) on the login page (4211), preferably by clicking an auto-login button provided on the hotspot login page (4211).

13. The method according to any one of claims 3 to 12, comprising the
(vii) sending a client status update request from the user's web browser (611) to the hotspot controller (41);
(viii) sending, from the hotspot controller (41) back to the user's device (61), a set of parameters comprising the latest challenge value, client state, location name, original URL, log out URL, client's IP address, and client's MAC address;
(ix) establishing an information channel between the web browser (611) in the user's device and an information exchange server (54) integrated into the hotspot architecture, wherein the information channel is realised, for example, by a WebSocket connection;
(x) sending, by the web browser (611) to the information exchange server (54), the verification information, preferably as a text message, via the information channel, wherein the verification information comprising the network identifier, the HMAC, and the challenge value;
(xi) preparing, by the hotspot, a verification process in order to check for the existence of a user account in the hotspot user database (52);
(xii) retrieving, in case the user account exists, the related user credentials, for example user name and password, from the hotspot user database (52) and sending said user credentials to the information exchange server (54);
(xiii) sending, by the information exchange server (54), the user credentials to the user's web browser (611) via the information channel established in step (ix);
(xiv) automatically triggering a login attempt by a login module (6111, 6221) running on the user's web browser (611), wherein the login module (6111, 6221) sends the user credentials to the hotspot controller (41);
(xv) submitting, by the hotspot controller (41) after having received the user credentials in step (xiv), an access-request to an authentication, authorisation and accounting server (51), AAA server (51);
(xvi) requesting, by the AAA server (51), the password of the login requesting user from the hotspot database (52);
(xvii) sending the result of the authentication and authorisation process performed by the AAA server (51) from the AAA server (51) to the hotspot controller (41);
(xviii) informing the user (6) about the authentication and authorisation status, preferably by presenting the status in the web browser (611) on the user's device (61) or on the web browser (622) on the smartphone (62);
(xix) sending, in case of granting network access for the user (6), an accounting-request message from the hotspot controller (41) to the AAA server (51);
(xx) storing the required accounting information in the hotspot database (51);
(xxi) confirming the accounting-request by an accounting-response message from the AAA server (51) to the hotspot controller (41).

14. The method according to any one of the preceding claims, comprising the further step of:
(xxii) providing Internet access to the user.

15. A hotspot for performing automated hotspot login according to the method of any one of the preceding claims, wherein the hotspot has an architecture comprising:
(a) one or more access point(s) (3) configured for allowing a user's device (61) to connect, via WLAN, to the hotspot;
(b) a hotspot access entity (4) connected to each of the one or more access points(s) (3); and
(c) a hotspot core entity (5) connected to the hotspot access entity (4), wherein the hotspot core entity (5) comprises:
(d) a voucher server (53) configured for being identified by a phone number and for receiving SMS from the user's device (61) or a user's smartphone (62), and
(e) an information exchange server (54) configured for communicating with web browser (611) in the user's device (61) via an information channel, wherein the information channel is realised, for example, by a WebSocket connection.

16. The hotspot according to claim 15,
wherein the hotspot core entity (5) further comprises of:
(h) a database (52) configured for storing accounting information, and
(i) an authentication, authorisation and accounting server (51), AAA server (51), configured for performing processes regarding a user's (6) authentication and authorisation; and
wherein the hotspot access entity (4) comprises of:
(f) a hotspot controller (41) configured for mediating between the user's device (61) and the AAA server (51), and
(g) a web server (42) configured for providing a hotspot login page (4211).

17. The hotspot according to claim 16, wherein the hotspot architecture further comprises: (h) a hotspot payment entity;

18. A System comprising a user's device (61) and the hotspot according to any one of claims 15 to 17.

19. A System comprising a user's device (61), a user's smartphone (62), and the hotspot according to any one of claims 15 to 17.
